# EUROPEAN PATENT SPECIFICATION

(11) **EP 2 911 972 B1**
(45) Date of publication and mention of the grant of the patent: **27.04.2016**
(21) Application number: 13803295.8
(22) Date of filing: 12.08.2013
(51) Int. Cl.: F16H 55/40, B66D 3/04

(54) **PORTABLE PULLEY BLOCK**
TRAGBARER FLASCHENZUGBLOCK
MOUFLE PORTATIVE

(30) Priority: 26.10.2012 SI 201200321
(43) Date of publication of application: 02.09.2015
(73) Proprietor: Tajfun Planina Proizvodnja Strojev, D.o.o., 3225 Planina Pri Sevnici (SI)
(72) Inventor: SPAN, Iztok, 1000 Ljubljana (SI)
(74) Representative: Borstar, Dusan
(86) International application number: PCT/SI2013/000050
(87) International publication number: WO 2014/065762

(56) References cited:
- WO-A1-95/10719
- WO-A2-2009/036469
- US-A1- 2005 173 688

## Description

The invention belongs to performing operations and transporting, in particular to lifting, hoisting and towing appliances, namely to portable winches, in particular to construction details related to casings thereof.

The purpose of the invention is to create a simple, light and comfortable portable pulley block with a freely rotatable pulley, which should at least in the field of forestry enable reliable operation, namely redirecting or tensioning of each disposable towing cable.

A portable pulley block is disclosed in GB 1,037,839 and comprises a pulley, which is in a freely rotatable manner placed on an axle, the free end portions of which protrude apart from each other and are each per se inserted within coaxially arranged bores available in two plates, which extend parallel to each other and form a casing of said pulley block. In the area of said pulley, said plates are rounded, and their circumferences are arranged outside of the area of said pulley, by which the pulley is protected against impacts and other influences from outside. On the other hand, said plates are in one direction extended essentially outside from the area of said pulley, and are at appropriate distance apart from the circumference of the pulley interconnected with each other by means of a bolt, which simultaneously enables maintaining of both plates at the required distance apart from each other. Said bolt extends throughout a connecting member which is freely rotatable placed on said bolt and extends outside from said plates, and is moreover furnished with an U-shaped yoke having two coaxial bores, through which a pin is inserted. Such pulley block is essentially suitable for redirecting of a cable by towing each load e.g. by means of a winch which is furnished with a winding drum. In particular in forestry, but also in building construction or by performing certain rescue activities, by towing a load in each desired direction in certain stage a direction of the towing force needs to be changed sometimes. It is usually very difficult, sometimes even impossible, to change the direction of the towing forces by means of repositioning of the complete towing appliance, because such measure is time consuming, and moreover, by performing such operations in situ, possible locations for placement of said towing appliance at each desired angles may also be very limited. Of that reason, a portable pulley block is normally applied at each desired location between the winch and the load in order to redirect each towing cable extending there-through. As soon as the portable pulley block is attached to appropriately stable location, e.g. linked to appropriately thick timber or an anchor or any other suitable means, each towing operation can be continued, by which both sections of the towing cable, namely a section between the towing appliance and the pulley of said portable pulley block, and the section between said pulley and the load, extend under each desired angle corresponding to previously mentioned redirection of the towing cable in situ.

In the context of the previously explained circumstances, the pulley block according to GB 1,037,839 is not really comfortable. Both plates, which form said casing of the pulley block, are generally in a non-detachable manner interconnected in the area of the axle of the pulley and said bolt, so that each placing of the towing cable around the pulley can be performed exclusively by means of introducing the end portion of the towing cable through the clearance between the pulley and the bolt, which practically means that the towing cable first of all needs to be released from the load, upon which said free end portion is allowed to be placed around the pulley in a previously described manner, and then only the portable pulley block can be linked by means of said yoke to each appropriate location, whereupon the towing operation can be continued. Besides, such pulley block is also not very practical in the view of manipulation therewith. On the one hand, such pulley block is pretty heavy, since the loadings require application of relatively thick steel plates, by means of which the pulley is protected and which are capable to withstand the loadings in the area between said axle of the pulley and the bolt. In order to avoid said problem, several recesses are available on said plate in order to reduce the weight of said plate, but an essential reduction can actually not be achieved. On the other hand, the presence of said connecting member with said yoke and said pin generates an additional problem, since a plurality of components is required, wherein at least the pin can be easily lost, upon which the whole appliance is inoperative, and moreover, said components protrude in all directions resulting in serious danger of injuring each user or each neighboring objects during e.g. the transporting or storage thereof. The practical needs of each user, either a forestry employee or e.g. a member of rescue staff, usually require placing such pulley block into a car trunk or hanging it on the duty belt, for which said pulley block according to GB 1,037,839 appears to be completely inappropriate due to previously discussed reasons.

A further pulley block is disclosed in US 2,411,625. Also this pulley block comprises a pulley, which is freely rotatable placed on an axle, which is embedded within coaxial bores in two plates, which together form a pulley block casing and are extended in a direction radially with respect to said pulley for the purposes of establishing appropriate interconnection between them by means of a bolt. In this case, said bolt is detachably connected with said plates and is allowed to be temporarily removed for the purposes of placing each towing cable around the pulley. To this aim, each plate is furnished with an elongated bore, which extends from the position of mounting said bolt towards the central axis of the pulley axle, and is moreover expanded in the area apart from the position of mounting the bolt, by which the bolt can be removed as soon as it is displaced to said expanded area. Such concept leads to essentially simplification of placement of the towing cable around the pulley, since the cable can be placed between said plate and around the pulley without disconnecting it apart from the load, and moreover, said plates are allowed to rotate around said axle relative to each other, which can still further contribute to easier placement of the towing cable. Also in this case however said plates must be relatively thick due to capability of withstanding each loads. Their weight is reduced by means of shortening the plates, which consequently in the direction away from said bolt do not overlay the complete circumference of the pulley, and moreover also by providing two diametrally opposite arranged cutoffs in each plate in the area between the circumference and the position of mounting the axle. As a consequence of such concept, the pulley is practically unprotected along its circumference and is therefore by performing operations in situ together with the cable placed thereon and exposed to impacts and other undesired influences from outside. On the other hand, due to the presence of said elongated bores with expanded areas for the purposes of establishing said detachable connection between the bolt and said plates, the material of both plates is essentially weakened exactly in the zone, where the majority of loadings between the pulley axle and the bolt is transferred, by which the transfer of loadings is essentially hindered and consequently the plates must be quite thick, by which the plates are then correspondingly heavier. Moreover, the edges of each plate in the area between the circumference of the pulley and position of the bolt extend essentially parallel to each other, while in the area of the pulley the plates are rounded. Accordingly, two sharp recesses are formed on each plate between said rounded area and said parallel edges, which are problematic not only in view of potential cracking, but also in view of possible jamming the towing cable, while by towing the load, despite to redirecting of the towing cable and towing forces, there is a tendency of still further changing of each towing direction, or while by performing each towing operation upon placement of a redirecting pulley block in position, the towing cable is released and by each subsequent tensioning of the rope the last shows tendency of forming a loop, which is then easily jammed into at least one of said recesses. Such jamming usually leads to serious damages of the towing cable, and in most cases to completely destroying thereof.

The invention refers to a portable pulley block, comprising a pulley, which is rotatably placed on an axle, which is embedded within a casing, which is formed of two parallel parts, which are at appropriate distance apart from said pulley detachably connectable with each other by means of a connecting member, which is at appropriate distance apart from the pulley optionally insertable through a bore in each of said parts of the casing and in the inserted state protected against undesired removal.

The invention provides that each of said parts of the casing is formed of a reinforcing grid consisting of a metallic material as well as of a liner consisting of a non-metallic material, by which said reinforcing grid is coated at least over the majority of the external surface which is faced away from the pulley.

Said reinforcing grid comprises a bearing area, which is formed of
- a primary bearing ring furnished with a bore adapted to receive said axle of the pulley block;
- a secondary bearing ring, which is arranged at a sufficient distance apart from the circumference of said pulley and is furnished with a bore adapted to receive said connecting member; and
- a pair of longitudinal bearing strips, which are parallel spaced apart from each other and by means of which said primary and secondary bearing ring are firmly interconnected;
as well as of a protecting ring, by which said primary bearing ring is concentrically surrounded and firmly interconnected by means of a plurality of radial spokes, wherein the outer diameter of said protecting ring is larger than the diameter of the pulley;
and also of a pair of external spokes, which each per se extend tangentially with respect to said protecting ring towards the secondary bearing ring, namely towards the junction between the last and each belonging longitudinal bearing strip of the bearing area of the reinforcing grid of the pulley block.
In a preferred embodiment of the invention, said reinforcing grid of each part of the casing is coated with said uniform liner of non-metallic material at least in the area of the complete protecting ring except of the bore for receiving the axle of the pulley, as well as in the area of said longitudinal bearing strips and said secondary bearing ring except of the bore for receiving of the connecting member.

Said external spokes of at least one part of the casing are preferably arranged outside of said liner, although there is a possibility of arranging said external spokes of at least one part of the casing within the area of said liner.

The invention further provides that said liner consists either of rubber or a thermoplastic material on the basis of polymers.

On the other hand, said reinforcing grid of each part of the casing consists of a steel plate, wherein the width of the protecting ring, the spokes and the external spokes is smaller than approximately a double thickness of said steel plate.

Besides, said connecting member, when inserted into each disposable bore in the secondary bearing ring of the reinforcing grid of each part of the casing, is at least partially rotatable around its longitudinal axis.

The invention will be described on the basis of an embodiment, which is shown in the attached drawings, wherein
Fig. 1 is an isometric view of a pulley block according to the invention;
Fig.2 is a cross-section of said pulley block in the plane A - A;

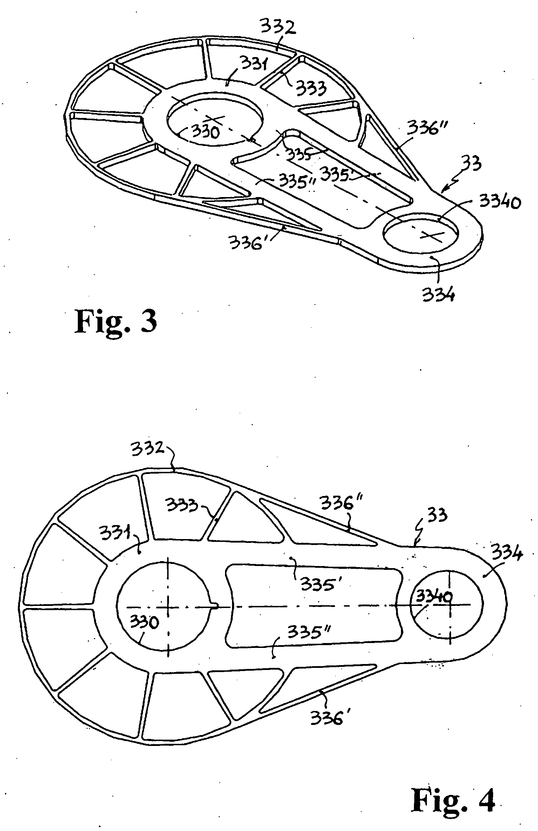

Fig.3 is an isometric view of one of both parts of a casing of the pulley block:
Fig.4 is a front view of the part according to Fig. 3.

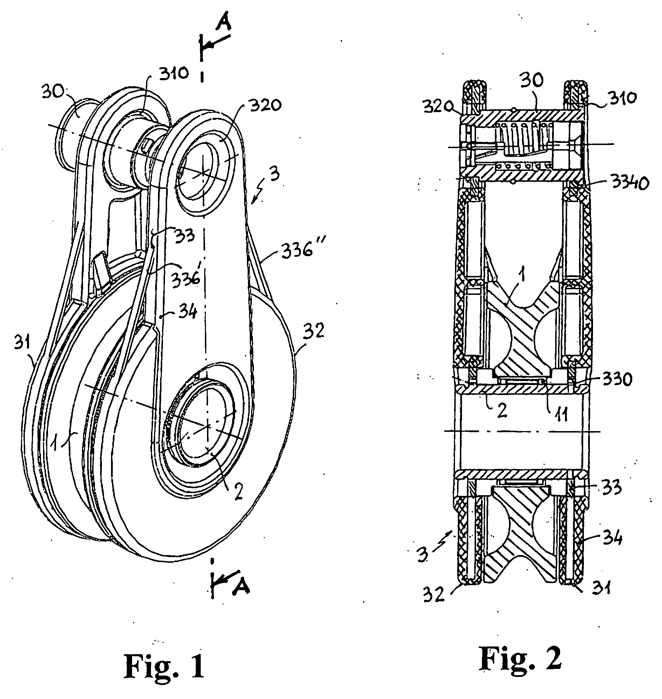

Portable pulley block according to Figs. 1 and 2 comprises a pulley 1, which is by means of a bearing 11 freely rotatable placed on an axis 2, which is embedded within a casing 3, which is formed by two parts 31, 32, which are according to the invention parallel spaced apart from each other and each of them is at a distance apart from said pulley 1 furnished with a bore 310, 320, so that by aligned parts 31, 32 said bores 310, 320 are arranged coaxially with respect to each other, and a connecting member 30 can be inserted through both of them, which allows detachable interconnection of said parts 31, 32 outside of the area of the pulley 1. Said connecting assembly 30 is either a pin or any other element or assembly, which is optionally insertable throughout said bored 310, 320 and can be in its inserted position protected against undesired removal, but when desired also easily removed from said bored 310, 320.

Each of said parts 31, 32 of the casing 3 is formed of an uniformly conceived reinforcing grid 33 consisting of metallic material, as well as of an uniformly conceived liner 34, which consists of a non-metallic material and by which at least the majority of the external surface facing away from said pulley 1 of the reinforcing grid 33 is coated. Said non-metallic liner 34 consists either of a thermoplastic material on the basis of polymers, wherein said reinforcing grid 33 is inserted into appropriate mold and coated within said material, or said liner 34 consists of natural or synthetic rubber, which is coated on said grid 33 by means of vulcanization or in any other suitable manner as shown in Figs 1 and 2 and will be described in more detail later-on. Such concept of parts 31, 32 of the pulley block is characterized by excellent external surface, which is pleasant by gripping and corrosion resistant, which does not jeopardize safety of each user or any other object when brought in contact therewith, and which at the same time protects the pulley 1 and other components of the pulley block against impacts and impurities, so that the complete pulley block is very comfortable both for deposition and also for transporting when hanging on the users duty belt, to which it can be clamped.

Said metallic reinforcing grid 33 serves on the one hand for the purposes of reliable transmission of loadings between the area of placement of the axle 2 and the area of said bores 310, 320 for receipt of said connecting member 30, and on the other hand also for protection of the pulley 1 together with each belonging cable, which is not shown in the drawings, against damages and other undesired influences from outside. To this aim, said reinforcing grid 33 comprises a primary bearing ring 331, which is arranged in the area of said axle 2 of the pulley 1 and is furnished with a central bore 330 which is adapted to receive said axle 2 of the pulley 1, and also a protecting ring 332, by which said primary bearing ring 331 is surrounded and the diameter of which is larger than the diameter of the pulley 1, wherein said rings 331, 332 are arranged concentrically and firmly interconnected by means of a plurality of radial spokes 333. Besides, said reinforcing grid 33 further comprises a secondary bearing ring 334, which is furnished with a central bore 3340 adapted to receive each connecting member 30, wherein said secondary bearing ring 334 is located apart from said protecting ring 332 and is firmly interconnected with said primary bearing ring 331 by means of two longitudinal bearing stripy 335', 335", which together with said primary bearing ring 331 and said secondary bearing ring 334 form a bearing area 335 of each part 31, 32 of the casing 3 of the pulley block.

Said protecting ring 332 is essentially circular and is via said spokes 333 firmly interconnected with said primary bearing ring 331 of the bearing area 335 of the reinforcing grid 33, and at the same time coincides into said longitudinal bearing strips 335', 335" of said bearing area 335. Moreover, the reinforcing grid 33 of each part 31, 32 of the pulley block comprises two external spokes 336', 336", which each per se extend tangentially with respect to the protecting ring 332 towards the secondary bearing ring 334 or to the junction of the last and each belonging longitudinal bearing strip 335', 335".

Such reinforcing grid 33 is preferably conceived as an uniform part and can be in the practice easily manufactured by means of cutting, e.g. by laser, or by means of punching the metallic plate. In a pulley block with a pulley 1 having a diameter 150 mm, the thickness of a steel plate, of which said reinforcing grid 33 is preferably manufactured, shall be 2 to 3 mm, while the width of the protecting ring 332, radial spokes 333 and said external spokes 336', 336" can also be relatively small and shall not exceed a double thickness of said metallic plate. Those skilled in the art shall understand that the total weight of such pulley block is then essentially lower than the weigh of any state of the art pulley blocks with comparable capacity.

The invention further provides that each reinforcing grid 33 is coated with said liner 34 at least on the external surface, which is faced away from the pulley 1, namely in the complete area of the protecting ring 332 except the bore 330 in the primary bearing ring 331, as well as in the complete area of the bearing area 335, namely in the area of longitudinal bearing strips 335', 335' and in the area of the secondary bearing ring 334 except in the bore 3340 for inserting the connecting member 30. In the shown embodiment according to Fig. 1 the external spokes 336', 336" extend outside of said liner 34, although in general they could also be covered with the liner 34. Due to the presence of said external spokes 336', 336", a smooth and continuous transition is available between the protecting ring 332 and the bearing area 335 in both sides of the reinforcing grid 33 of each part 31, 32 of the casing 3 of the pulley block, by which potential retaining or jamming of the towing cable into a recess between the protecting ring 332 and the bearing area 335 is eliminated.

The connecting member 30 is preferably of such concept, that upon inserting thereof throughout the parts 31, 32 of the casing 3 it can be rotated or at least partially pivoted around its longitudinal axis.

Before operation of said pulley block, said connecting member 30 needs to be removed from at least one of said parts 31, 32 of the casing 3, upon which each cable (not shown) is allowed to be placed into the casing 3 around the pulley 1, wherein upon removal of said connecting member 30 said parts 31, 32 are allowed to rotate relative to each other around the axle 2 of the pulley 1. Before inserting said connecting member 30, both parts 31, 32 of the casing 3 must be aligned, so that the bores 310, 320 extend coaxially. Upon that, the pulley block can be attached to each desired place by means of the connecting member 30, by which the pulley block is capable to function as a cable and towing force redirecting means. When used in forestry or e.g. in rescue activities, the connecting requisite 30 can be attached to appropriately thick timber by means of a belt or strap, by which appropriate friction is generated between the surface of the connecting member 30 and said belt or strap. However, since the connecting member 30 is within said bores 310, 320 at least partially rotatable around its longitudinal axis, said friction does not hinder potential changing or adjusting of position of the pulley block, depending on each particular needs.

## Claims

1. Portable pulley block, comprising a pulley (1), which is rotatably placed on an axle (2), which is embedded within a casing (3), which is formed of two parallel parts (31, 32), which are at appropriate distance apart from said pulley (1) detachably connectable with each other by means of a connecting member (30), which is at appropriate distance apart from the pulley (1) optionally insertable through a bore (310, 320) in each of said parts (31, 32) of the casing (3) and in the inserted state protected against undesired removal, **characterized in that** each of said parts (31, 32) of the casing (3) is formed of a reinforcing grid (33) consisting of a metallic material as well as of a liner (34) consisting of a non-metallic material, by which said reinforcing grid (33) is coated at least over the majority of the external surface which is faced away from the pulley (1), wherein said reinforcing grid (33) comprises a bearing area (335), which is formed of
- a primary bearing ring (331) furnished with a bore (330) adapted to receive said axle (2) of the pulley block;
- a secondary bearing ring (334), which is arranged at a sufficient distance apart from the circumference of said pulley (1) and is furnished with a bore (3340) adapted to receive said connecting member (30); and
- a pair of longitudinal bearing strips (335', 335"), which are parallel spaced apart from each other and by means of which said primary and secondary bearing ring (331, 334) are firmly interconnected;
as well as of a protecting ring (332), by which said primary bearing ring (331) is concentrically surrounded and firmly interconnected by means of a plurality of radial spokes (333), wherein the outer diameter of said protecting ring (332) is larger than the diameter of the pulley (1);
and moreover also of a pair of external spokes (336', 336"), which each per se extend tangentially with respect to said protecting ring (332) towards the secondary bearing ring (334), namely towards the junction between the last and each belonging longitudinal bearing strip (335', 335") of the bearing area (335) of the reinforcing grid (33) of the pulley block.

2. Portable pulley block according to Claim 1, **characterized in that** said reinforcing grid (33) of each part (31, 32) of the casing (3) is coated with said uniform liner (34) of non-metallic material at least in the area of the complete protecting ring (332) except of the bore (330) for receiving the axle (2) of the pulley (1), as well as in the area of said longitudinal bearing strips (335', 335") and said secondary bearing ring (334) except of the bore (3340) for receiving of the connecting member (30).

3. Portable pulley block according to Claim 1 or 2, **characterized in that** said external spokes (336', 336") of at least one part (31, 32) of the casing (3) are arranged outside of said liner (34).

4. Portable pulley block according to Claim 1 or 2, **characterized in that** said external spokes (336', 336") of at least one part (31, 32) of the casing (3) are arranged within the area of said liner (34).

5. Portable pulley block according to anyone of Claims 1 - 4, **characterized in that** said liner (34) consists of rubber.

6. Portable pulley block according to anyone of Claims 1 - 4, **characterized in that** said liner (34) consists of thermoplastic material on the basis of polymers.

7. Portable pulley block according to anyone of Claims 1 - 6, **characterized in that** said reinforcing grid (33) of each part (31, 32) of the casing (3) consists of a steel plate, wherein the width of the protecting ring (332), the spokes (333) and the external spokes (336', 336") is smaller than approximately a double thickness of said steel plate.

8. Portable pulley block according to anyone of Claims 1 - 6, **characterized in that** said connecting member (30), when inserted into each disposable bore (3340) in the secondary bearing ring (334) of the reinforcing grid (33) of each part (31, 32) of the casing (3), is at least partially rotatable around its longitudinal axis.

## Patentansprüche

1. Tragbarer Flaschenzugblock, der eine Riemenscheibe (1) aufweist, die drehbar auf einer Achse (2) platziert ist, die in einem Gehäuse (3) integriert ist, das aus zwei parallelen Elementen (31, 32) gebildet ist, die in einem geeigneten Abstand zur Riemenscheibe (1) lösbar miteinander mittels eines Verbindungselements (30) verbindbar sind, welches in einem geeigneten Abstand zur Riemenscheibe (1) optional durch eine Bohrung (310, 320) in jedem der Elemente (31, 32) des Gehäuses (3) eingeführt werden kann und im eingeführten Zustand vor einem unerwünschtem Entfernen geschützt ist, **dadurch gekennzeichnet, dass** jedes der Elemente (31, 32) des Gehäuses (3) aus einem Verstärkungsgitter (33) besteht, das aus einem metallischen Material sowie aus einem Mantel (34) aus einem nichtmetallischen Material gebildet ist, mit dem das Verstärkungsgitter (33) mindestens über den Hauptteil der von der Riemenscheibe (1) wegweisenden Außenfläche beschichtet ist, wobei das Verstärkungsgitter (33) eine Lagerfläche (335) aufweist, die gebildet ist aus:
- einem primären Lagerring (331), der mit einer Bohrung (330) versehen ist, die ausgestaltet ist, um die Achse (2) des Flaschenzugblocks aufzunehmen;
- einem sekundären Lagerring (334), der in einem ausreichenden Abstand zum Umfang der Riemenscheibe (1) angeordnet ist und mit einer Bohrung (3340) versehen ist, die ausgestaltet ist, um das Verbindungselement (30) aufzunehmen; und
- einem Paar Längslagerstreifen (335', 335"), die parallel zueinander beabstandet sind und durch die der primäre und sekundäre Lagerring (331, 334) fest miteinander verbunden sind;
- sowie einem Schutzring (332), von dem der primäre Lagerring (331) konzentrisch umgeben und mittels einer Vielzahl von radialen Speichen (333) mit diesem verbunden ist, wobei der Außendurchmesser des Schutzrings (332) größer als der Durchmesser der Riemenscheibe (1) ist;
und darüber hinaus auch einem Paar äußerer Speichen (336', 336"), die jeweils für sich tangential zum Schutzring (332) in Richtung des zweiten Lagerrings (334), d. h. in Richtung der Verbindung zwischen dem letzten und jedem dazugehörigen Längslagerstreifen (335', 335") der Lagerfläche (335) des Verstärkungsgitters (33) des Flaschenzugblocks verlaufen.

2. Tragbarer Flaschenzugblock gemäß Anspruch 1, **dadurch gekennzeichnet, dass** das Verstärkungsgitter (33) eines jeden Elements (31, 32) des Gehäuses (3) mit dem einheitlichen Mantel (34) aus einem nichtmetallischem Material mindestens im Bereich des gesamten Schutzrings (332) mit Ausnahme der Bohrung (330) zur Aufnahme der Achse (2) der Riemenscheibe (1) beschichtet ist, sowie in dem Bereich der Längslagerstreifen (335', 335") und des sekundären Lagerrings (334) mit Ausnahme der Bohrung (3340) zur Aufnahme des Verbindungselements (30).

3. Tragbarer Flaschenzugblock gemäß Anspruch 1 oder 2, **dadurch gekennzeichnet, dass** die äußeren Speichen (336', 336") des mindestens einen Elements (31, 32) des Gehäuses (3) außerhalb des Mantels (34) angeordnet sind.

4. Tragbarer Flaschenzugblock gemäß Anspruch 1 oder 2, **dadurch gekennzeichnet, dass** die äußeren Speichen (336', 336") des mindestens einen Elements (31, 32) des Gehäuses (3) innerhalb des Bereichs des Mantels (34) angeordnet sind.

5. Tragbarer Flaschenzugblock gemäß einem der Ansprüche 1 bis 4, **dadurch gekennzeichnet, dass** der Mantel (34) aus Gummi besteht.

6. Tragbarer Flaschenzugblock gemäß einem der Ansprüche 1 bis 4, **dadurch gekennzeichnet, dass** der Mantel (34) aus einem thermoplastischen Material auf der Basis von Polymeren besteht.

7. Tragbarer Flaschenzugblock gemäß einem der Ansprüche 1 bis 6, **dadurch gekennzeichnet, dass** das Verstärkungsgitter (33) eines jeden Elements (31, 32) des Gehäuses (3) aus einer Stahlplatte besteht, wobei die Breite des Schutzrings (332), der Speichen (333) und der äußeren Speichen (336', 336") geringer als ungefähr die doppelte Dicke der Stahlplatte ist.

8. Tragbarer Flaschenzugblock gemäß einem der Ansprüche 1 bis 6, **dadurch gekennzeichnet, dass** das Verbindungselement (30), wenn es in jede verfügbare Bohrung (3340) in dem sekundären Lagerring (334) des Verstärkungsgitters (33) eines jeden Elements (31, 32) des Gehäuses (3) eingeführt ist, zumindest teilweise um seine Längsachse drehbar ist.

## Revendications

1. Moufle portative comprenant une poulie (1) qui est placée de manière à pouvoir tourner sur un essieu (2) qui est incorporé dans une coque (3) qui est composée de deux parties parallèles (31, 32) qui se situent à une distance appropriée de ladite poulie (1) et peuvent être reliées de façon amovible l'une à l'autre, au moyen d'un élément de liaison (30) qui se situe à une distance appropriée de la poulie (1), qui peut éventuellement être introduit dans un trou (310, 320) ménagé dans chacune desdites parties (31, 32) de la coque (3) et qui est, dans son état introduit, protégé contre un retrait indésirable, **caractérisée en ce que** chacune desdites parties (31, 32) de la coque (3) est composée d'une grille de renfort (33) constituée d'un matériau métallique ainsi que d'une chemise (34) constituée d'un matériau non métallique dont ladite grille de renfort (33) est revêtue au moins sur la majeure partie de sa surface extérieure qui est orientée à l'opposé de la poulie (1), dans laquelle ladite grille de renfort (33) comprend une zone de roulement (335) qui est composée de:
- une bague de roulement primaire (331) pourvue d'un trou (330) destiné à recevoir ledit essieu (2) de la moufle ;
- une bague de roulement secondaire (334) qui est disposée à une distance suffisante de la circonférence de ladite poulie (1) et qui est pourvue d'un trou (3340) destiné à recevoir ledit élément de liaison (30) ; et
- une paire de bandes de roulement longitudinales (335', 335") qui sont espacées parallèlement l'une de l'autre et au moyen desquelles lesdites bagues de roulement primaire et secondaire (331, 334) sont fermement reliées entre elles ;
ainsi que d'une bague de protection (332) dont ladite bague de roulement primaire (331) est concentriquement entourée et à laquelle elle est fermement reliée au moyen d'une pluralité de rayons radiaux (333), dans laquelle le diamètre extérieur de ladite bague de protection (332) est supérieur au diamètre de la poulie (1) ;
et également d'une paire de rayons externes (336', 336") qui s'étendent chacun per se de manière tangentielle par rapport à ladite bague de protection (332) vers la bague de roulement secondaire (334), à savoir vers la jonction entre cette dernière et chaque bande de roulement longitudinale (335', 335") correspondante de la zone de roulement (335) de la grille de renfort (33) de la moufle.

2. Moufle portative selon la revendication 1, **caractérisée en ce que** ladite grille de renfort (33) de chaque partie (31, 32) de la coque (3) est revêtue de ladite chemise uniforme (34) de matériau non métallique, au moins dans la zone de la bague de protection complète (332), à l'exception du trou (330) destiné à recevoir l'essieu (2) de la poulie (1), ainsi que dans la zone desdites bandes de roulement longitudinales (335', 335") et de ladite bague de roulement secondaire (334), à l'exception du trou (3340) destiné à recevoir l'élément de liaison (30).

3. Moufle portative selon la revendication 1 ou 2, **caractérisée en ce que** lesdits rayons externes (336', 336") d'au moins une partie (31, 32) de la coque (3) sont disposés à l'extérieur de ladite chemise (34).

4. Moufle portative selon la revendication 1 ou 2, **caractérisée en ce que** lesdits rayons externes (336', 336") d'au moins une partie (31, 32) de la coque (3) sont disposés à l'intérieur de la zone de ladite chemise (34).

5. Moufle portative selon l'une quelconque des revendications 1 à 4, **caractérisée en ce que** ladite chemise (34) est constituée de caoutchouc.

6. Moufle portative selon l'une quelconque des revendications 1 à 4, **caractérisée en ce que** ladite chemise (34) est constituée d'une matière thermoplastique à base de polymères.

7. Moufle portative selon l'une quelconque des revendications 1 à 6, **caractérisée en ce que** ladite grille de renfort (33) de chaque partie (31, 32) de la coque (3) est constituée d'une plaque d'acier, dans laquelle la largeur de la bague de protection (332), des rayons (333) et des rayons externes (336', 336") est inférieure à environ le double de l'épaisseur de ladite plaque d'acier.

8. Moufle portative selon l'une quelconque des revendications 1 à 6, **caractérisée en ce que** ledit élément de liaison (30), une fois introduit dans chaque trou disponible (3340) ménagé dans la bague de roulement secondaire (334) de la grille de renfort (33) de chaque partie (31, 32) de la coque (3), peut tourner au moins partiellement autour de son axe longitudinal.
